# FASCICULE DE BREVET EUROPEEN

(11) **EP 1 627 703 B1**
(45) Date de publication et mention de la délivrance du brevet: **26.03.2008**
(21) Numéro de dépôt: 05291728.3
(22) Date de dépôt: 16.08.2005
(51) Int. Cl.: B23B 51/04

(54) **Tête de forage profond et procédé de forage profond pour le forage d'une pièce de fabrication**
Tiefbohrkopf und Tiefbohrverfahren zur Bohrung eines Werkstücks
Deep-drilling head and process of deep-drilling for the drilling of a workpiece

(30) Priorité: 17.08.2004 FR 0408917
(43) Date de publication de la demande: 22.02.2006
(73) Titulaire: MESSIER-DOWTY S.A., 78140 Velizy Villacoublay (FR)
(72) Inventeur: Biscay, Albert, 64400 Esquiule (FR)
(74) Mandataire: Barbin le Bourhis, Joël

(56) Documents cités:
- DE-A1- 3 522 324
- US-A- 1 940 220
- US-A1- 2004 101 371

## Description

La présente invention concerne une tête de forage profond telle que décrite dans le préambule de la revendication 1, un procédé de forage profond utilisant une telle tête de forage pour le forage d'une pièce de fabrication, et plus particulièrement une pièce de fabrication en titane, ainsi que l'utilisation d'une telle tête de forage profond. Une telle tête de forage est connue du document DE-A- 3522324.

Le forage profond se différencie du forage peu profond, ou du perçage, par le rapport L/D entre la longueur L et le diamètre D du trou à réaliser. Ainsi, par forage profond on entend désigner dans le présent mémoire une technique de forage permettant de réaliser des trous ayant un rapport L/D supérieur ou égal à 10. Avec un tel rapport L/D, il est en particulier nécessaire d'évacuer les copeaux taillés dans la pièce de fabrication pendant le forage.

D'autre part, on notera que l'invention est destinée plus particulièrement au forage de trous de diamètre important, généralement supérieur à 40 mm et, de préférence, supérieur ou égal à 65 mm.

On utilise déjà des outils de forage profond pour forer des pièces en acier allié, tels que les aciers alliés 300M et 4340M. Ces outils sont formés d'une barre d'entraînement en rotation, à l'extrémité avant de laquelle est montée une tête de forage profond qui comprend un corps dont la face avant présente au moins un tranchant suivi d'un évidement qui débouche sur un conduit intérieur audit corps, ce conduit permettant l'évacuation vers l'arrière des copeaux susceptibles d'être formés lors du forage.

Pour faciliter l'évacuation des copeaux, limiter l'échauffement et diminuer les frottements entre la tête de forage et le fond du trou réalisé, on utilise un liquide de forage, généralement de l'huile entière ou de l'huile soluble entre 10 et 15%.

Les formes générales des parties avant et arrière de la tête de forage présentent une symétrie de révolution par rapport à l'axe central autour duquel la tête et l'outil sont entraînés en rotation.

La partie arrière de la tête de forage et la barre d'entraînement sont des cylindres creux, le diamètre de la barre d'entraînement étant inférieur ou égal au diamètre de la partie arrière de la tête de forage. Ce dernier diamètre est par ailleurs inférieur au diamètre maximal de la partie avant de la tête de forage, de sorte qu'il subsiste lors du forage un espace annulaire entre la partie arrière de la tête de forage, la barre d'entraînement, et les parois du trou creusé. Cet espace annulaire, nécessaire pour limiter les frottements entre l'outil et les parois du trou, est également utilisé pour amener le liquide de forage jusqu'à la partie avant de la tête de forage. Le liquide chargé des copeaux est ensuite évacué via le conduit intérieur traversant la partie arrière de la tête de forage et la barre d'entraînement.

En raison de cet espace annulaire, il est nécessaire de guider la tête de forage lors de son avancée. A cette fin, il est connu d'utiliser trois patins de guidage revêtus généralement de carbure ou des patins Celoron (marque déposée), qui sont régulièrement répartis et font saillie à la périphérie latérale extérieure de la partie arrière de la tête, et qui sont destinés à prendre appui contre les parois du trou formé lors du forage.

Cependant les têtes de forage connues à ce jour, s'avèrent inadaptées pour forer des pièces en titane (Ti). En effet le titane colle aux patins de guidage, ce qui a pour conséquence le grippage de la tête de forage et il devient alors quasiment impossible à l'aide des machines couramment utilisées dans le domaine du forage, de développer un couple de forage suffisamment élevé pour continuer d'entraîner la tête en rotation. De plus, on constate une usure prématurée des patins de guidage, ce qui implique un remplacement fréquent de ces patins, alors que leur prix est élevé en raison de leur technicité et des matériaux qui les constituent. Enfin, à cause de ces mauvaises conditions de forage la géométrie du trou réalisé est si mauvaise (en particulier on observe des déviations significatives par rapport à l'axe du forage) qu'il est très difficile, voire impossible, de la rectifier par usinage. En outre, cette étape d'usinage ultérieur est rendue difficile par la présence des particules de carbures provenant des patins de guidage.

L'invention a pour but d'améliorer cet état de la technique en proposant une tête de forage profond adaptée en particulier au forage profond de pièces de fabrication en matériaux durs, comme le titane.

Pour atteindre ce but, l'invention a pour objet une tête de forage profond telle que décrite dans la revendication 1, susceptible de tourner autour d'un axe central, comprenant un corps dont la partie avant présente au moins un tranchant suivi d'un évidement qui débouche sur un conduit intérieur audit corps, ce conduit permettant l'évacuation vers l'arrière des copeaux susceptibles d'être formés lors du forage, caractérisée en ce qu'elle comprend à son extrémité avant et en son centre un foret pilote apte à guider ladite tête lors du forage pour lui faire suivre l'axe du forage, qui est généralement l'axe de l'arbre d'entraînement des moyens d'entraînement en rotation de la tête de forage.

La présence du foret pilote, ou foret de centrage, permet de s'affranchir de la présence de patins de guidage et des problèmes liés au collage du titane sur ces patins. Par conséquent, le couple de forage nécessaire pour entraîner en rotation la tête lors du forage est suffisamment faible pour pouvoir être développé par les machines couramment utilisées pour le forage de matériaux, autres que le titane. En outre, le guidage obtenu à l'aide dudit foret permet d'obtenir une bonne géométrie du trou réalisé et en particulier de limiter les déviations par rapport à l'axe du forage, les revendications dépendantes décrivent des réalisation, avantageuses de l'invention.

Selon un mode particulier de réalisation de l'invention, la tête de forage profond de l'invention comprend, en outre, des patins qui sont solidaires dudit corps et qui font saillie à la périphérie latérale extérieure de ce dernier, la distance entre la face extérieure de ces patins et l'axe central étant inférieure à la distance entre l'axe central et le bord latéral extérieur du tranchant le plus éloigné de cet axe.

Il convient de ne pas confondre ces patins avec les patins de guidage utilisés dans l'art antérieur, car ces patins n'assurent aucunement le guidage de la tête de forage, ce dernier étant entièrement assuré par le foret pilote. Les patins montés sur la tête de forage de l'invention sont utiles une fois le forage terminé, lors du retrait de la tête de forage hors du trou réalisé, et permettent d'éviter que le bord latéral extérieur du tranchant le plus éloigné de l'axe central de la tête de forage, raye profondément les parois de ce trou. A cette fin, ces patins sont positionnés sur le corps de la tête de forage de sorte que cette tête puisse s'appuyer sur au moins un de ces patins lors de son retrait. Le poids de la tête de forage peut donc se répartir entre ledit patin et ledit tranchant, de sorte que la pression éventuellement exercée par le tranchant sur les parois du trou est moindre et les rayures formées peuvent être facilement rectifiées lors d'une étape d'usinage ultérieure. Ces patins peuvent également se révéler utiles en cas de rupture d'un des éléments de la tête de coupe (généralement un des éléments de coupe formant lesdits tranchants), pour limiter les zones de contact entre la tête et les parois du trou creusé et protéger ainsi ces parois.

Cette différence de fonctionnalité entre les patins de l'invention et les patins de guidage connus se traduit par une différence des matériaux utilisés et par le fait que les patins de l'invention dépassent seulement sur une faible distance de la périphérie du corps de la tête de forage, ce qui permet d'éviter tout phénomène de collage. Les patins de l'invention sont réalisés par exemple en bronze, matériau peu onéreux de sorte que leur remplacement n'engendre pas de frais importants.

L'invention a également pour objet un procédé de forage profond pour le forage d'une pièce de fabrication, caractérisé en ce qu'il comprend une tête de forage du type de celle précédemment décrite, une barre d'entraînement en rotation, solidarisée à ladite tête de forage, et des moyens pour faire tourner ladite barre d'entraînement.

Ce procédé permet de forer une pièce de fabrication en titane, avec un rapport L/D entre la profondeur L du trou réalisé dans cette pièce et le diamètre D de ce dernier, supérieur ou égal à 10, le diamètre D étant, de préférence, supérieur ou égal à 65 mm. A titre d'exemple, on a pu forer, dans une pièce en titane, un trou de 185mm de diamètre D sur une longueur L de 3400mm, soit un rapport L/D supérieur à 18.

L'invention sera bien comprise et ses avantages apparaîtront mieux à la lecture de la description détaillée qui suit, de modes de réalisation de l'invention représentés à titre d'exemples non limitatifs.

La description se réfère aux dessins annexés sur lesquels :
- la figure 1 représente une vue en perspective de la tête de forage profond de l'invention ;
- la figure 2 est une vue latérale de la tête de forage profond de la figure 1 ;
- la figure 2a est une coupe selon le plan IIA-IIA de la figure 2, d'un détail de la tête de forage profond de la figure 1 ;
- la figure 3 est une vue de face de la tête de forage profond de la figure 1 ;
- la figure 4 est une représentation schématique d'un premier type d'outils de forage profond selon l'invention ;
- la figure 5 est une représentation schématique d'un deuxième type d'outils de forage profond selon l'invention.

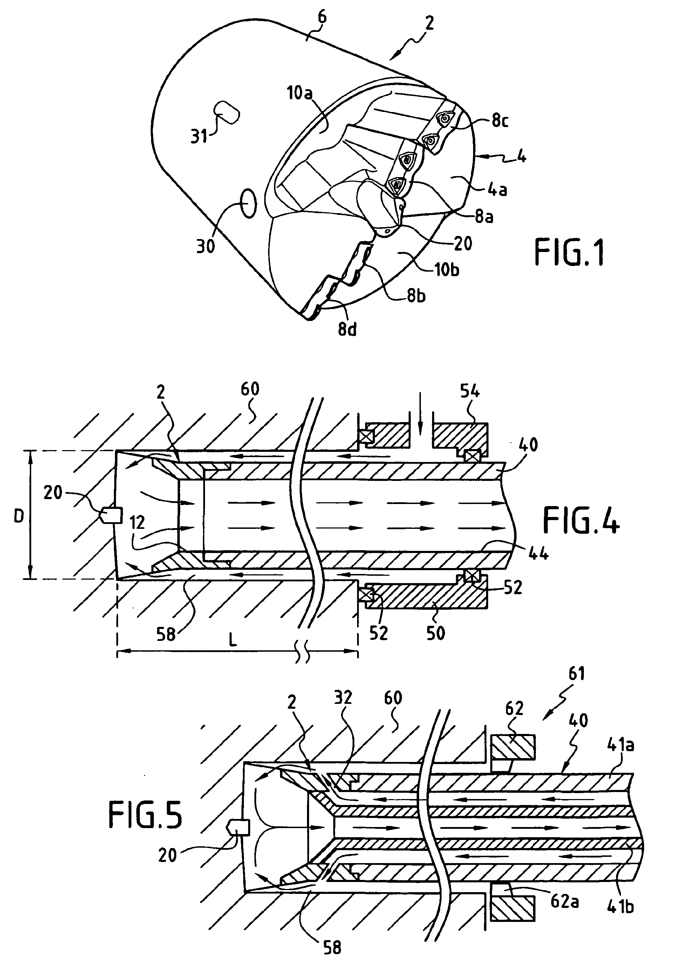

En référence aux figures 1, 2, 2a et 3, nous allons maintenant décrire un exemple de tête de forage selon l'invention.

Selon ce mode de réalisation particulier, la tête de forage comprend un corps 2 qui présente une partie avant 4 et une partie arrière 6. Cette tête de forage est destinée à être entraînée en rotation autour de l'axe central A-A. Le poids de la tête de forage est réparti de sorte que le centre de gravité de cette pièce corresponde avec l'axe central A-A de rotation, ce qui permet d'éviter tout balourd.

La forme générale du corps 2 présente une symétrie de révolution par rapport à l'axe central A-A. Plus précisément la partie avant 4 du corps 2 présente une forme générale tronconique s'élargissant vers l'avant et la partie arrière 6 a une forme générale de cylindre creux de diamètre extérieur E.

La face avant 4a de la partie avant 4 présente en général au moins un tranchant formé par au moins une plaquette de coupe montée sur la partie avant 4. Dans l'exemple, la face avant 4a présente quatre tranchants 8a, 8b, 8c et 8d. Ces tranchants sont sensiblement perpendiculaires à l'axe central A-A et situés à des distances échelonnées de cet axe (on parle bien entendu ici de distances radiales) et telles que les zones balayées par ces tranchants lors de la rotation du corps 2 se recouvrent en partie. Par ordre d'éloignement par rapport à l'axe central A-A, on trouve les tranchants 8a, 8b, 8c et 8d.

Chaque tranchant est formé par deux plaquettes de coupe 7 amovibles qui sont adjacentes mais pas nécessairement contiguës. Plus précisément, dans l'exemple, chaque paire de plaquettes de coupe 7 est montée sur un support amovible, ci-après dénommé cassette 9, monté sur la partie avant 4. Ces cassettes 9 peuvent être montées sur la partie avant 4 avec différentes hauteurs ou différents degrés d'inclinaison. Après avoir réglé le positionnement des cassettes, aucun réglage supplémentaire n'est nécessaire pour monter les plaquettes de coupe 7 sur ces cassettes 9, car les logements ménagés dans les cassettes 9 et destinés à recevoir lesdites plaquettes 7 sont ajustés aux dimensions de ces dernières. Les cassettes et les plaquettes sont solidarisées entre elles et à la tête de forage par vissage ou par tout autre moyen. Le choix du type de plaquettes de coupe 7 (forme, matériau...) à utiliser est effectué principalement en fonction du matériau de la pièce à forer et est à la portée de l'homme du métier. Pour le forage profond du titane, on choisit de préférence des plaquettes de coupe en carbure.

On notera que les tangentes aux tranchants peuvent être légèrement inclinés par rapport au plan perpendiculaire à l'axe central A-A pour faciliter le forage et, en particulier, que la tangente au tranchant 8c peut être incliné d'un angle « x » compris entre 0 et 5°, de préférence entre 1 et 3° par rapport à la tangente au tranchant 8a, ce qui facilite l'évacuation des copeaux.

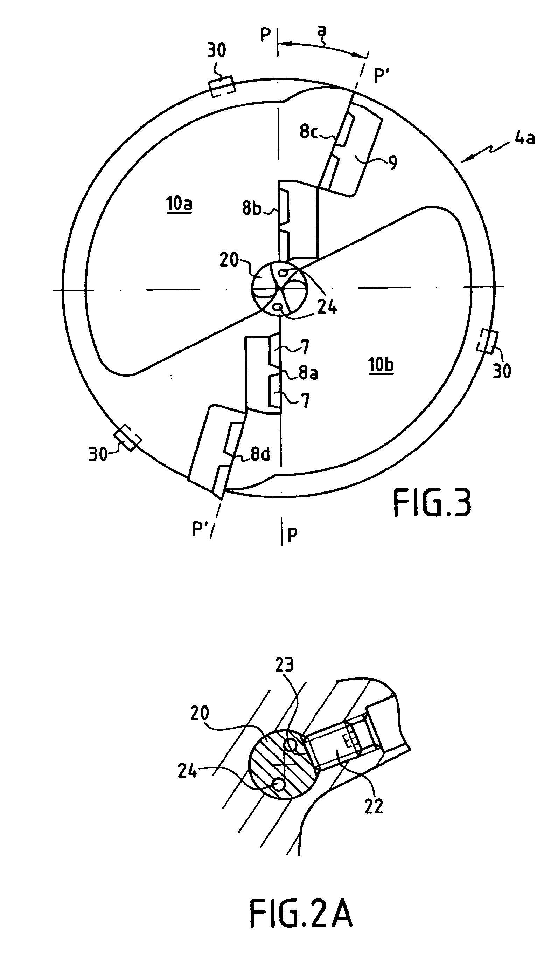

Dans l'exemple, les tranchants 8a et 8b sont situés sensiblement dans un même plan P-P contenant l'axe central A-A, représenté figure 3, tandis que les tranchants 8c et 8d sont situés sensiblement dans un autre plan P'-P' contenant également l'axe central A-A, qui forme généralement avec le plan P-P un angle « a » compris entre 5 et 30°, et de préférence entre 10 et 20°, la valeur de 15° ayant été retenue pour une tête de forage utilisée pour forer un trou de 185mm de diamètre dans une pièce en titane. On a pu constater que cette fourchette de valeurs d'angle « a » permet de faciliter le forage. En particulier, on remarque que l'évacuation des copeaux est facilitée, la vitesse de forage est plus importante et que l'usure des tranchants est moindre.

Comme on peut le voir sur les figures 1, 2 et 3, les tranchants 8a à 8d sont suivis d'évidements 10a et 10b qui débouchent sur un conduit 12 intérieur au corps 2 qui se forme dans la partie avant 4 et qui se prolonge dans la partie arrière 6. Ce conduit 12 permet d'évacuer vers l'arrière les copeaux formés lors du forage.

Nous allons maintenant décrire le foret pilote 20 situé au centre de la face avant 4a de la tête de forage profond. Ce foret pilote est amovible et la tête de forage profond de l'invention comprend des moyens de blocage en rotation de ce foret pilote 20, et comprend également des moyens de réglage de la distance d' de dépassement du foret pilote 20. La distance de dépassement d' étant la distance sur laquelle le foret 20 dépasse, à l'avant du tranchant le plus avancé du corps 2.

Le foret 20 est logé dans un logement 21 prévu à cet effet au centre de la face avant 4a de la tête 2. Il est maintenu dans ce logement 21 à l'aide desdits moyens de fixation qui comprennent une vis de serrage 22 logée à l'intérieur d'un alésage (de préférence transversal au logement 21) qui débouche, d'une part, dans ledit logement 21 et, d'autre part, à la périphérie latérale extérieure de la partie avant 4 du corps 2, formant ainsi une ouverture 24 permettant d'accéder à la tête de la vis 22. Ledit alésage présente au voisinage du logement 21 un filetage interne dans lequel il est possible de visser la vis 22. Le vissage de la vis 22 permet de serrer le foret 20 entre la vis 22 et la paroi du logement 21 située en face de cette vis, pour le bloquer en rotation. Pour faciliter l'appui de la vis 22, le foret 20 peut présenter un méplat 23. On notera que les moyens de blocage précités font également office de moyens de fixation du forêt 22 au corps 2. Tout autre moyen de blocage en rotation, comme une goupille ou un système de rainure/nervure, pourrait être envisagé.

Les moyens de réglage de la distance d' de dépassement du foret pilote 20 comprennent quant à eux, dans l'exemple représenté, une vis de réglage 26. Cette vis 26 est vissée dans un filetage 28 réalisé dans un alésage ménagé dans la partie avant 4 de la tête 2 et débouchant d'une part au fond du logement 21 et, d'autre part, dans le conduit intérieur 12 au corps 2. Le foret pilote 20 repose sur l'extrémité de la tige de la vis 26, cette extrémité faisant saillie au fond du logement 21. Le vissage/dévissage de la vis 26 permet ainsi de faire varier la distance d', avant le serrage du foret par la vis 22.

Avantageusement, on fait en sorte que le foret pilote dépasse à l'avant du tranchant le plus avancé du corps 2, d'une distance d' comprise entre 1% et 20% de la distance d entre l'axe central et le bord latéral extérieur du tranchant le plus éloigné de cet axe. Cette distance d' sur laquelle s'étend la partie extérieure du foret pilote doit être suffisante pour assurer un bon guidage et ne doit pas être trop élevée de manière à limiter les risques de flambage ou de rupture du foret. Aussi, pour un diamètre D de forage de 185 mm, on choisira par exemple une distance d' comprise entre 8 et 10 mm, soit environ entre 8 et 11% de la distance d entre l'axe central et le bord latéral extérieur du tranchant le plus éloigné de cet axe, égale ici à 185/2 = 92,5 mm.

Par ailleurs, avantageusement, le rayon du foret pilote 20 est au plus égal au cinquième (20%) de la distance d entre l'axe central A-A et le bord latéral extérieur du tranchant le plus éloigné de cet axe. En effet, le diamètre du foret pilote 20 doit garantir une surface d'appui du foret suffisante pour assurer le guidage de la tête de forage, tout en restant suffisamment faible pour limiter la zone d'action du foret, ce dernier jouant principalement un rôle pour le guidage de la tête et non pour le forage (bien qu'il y participe). Pour une distance d de 92.5 mm, on choisira par exemple le rayon du foret 20 égal à 15 mm.

L'extrémité avant du foret pilote peut présenter diverses formes. La littérature sur les différentes formes possibles des forets pilotes dans le domaine du perçage étant abondante, l'homme du métier pourra s'y référer. Dans le cas présent, on a pu constater qu'une extrémité avant de forme simple, sensiblement pointue, donnait de bons résultats de guidage et pénétrait facilement dans la pièce de fabrication.

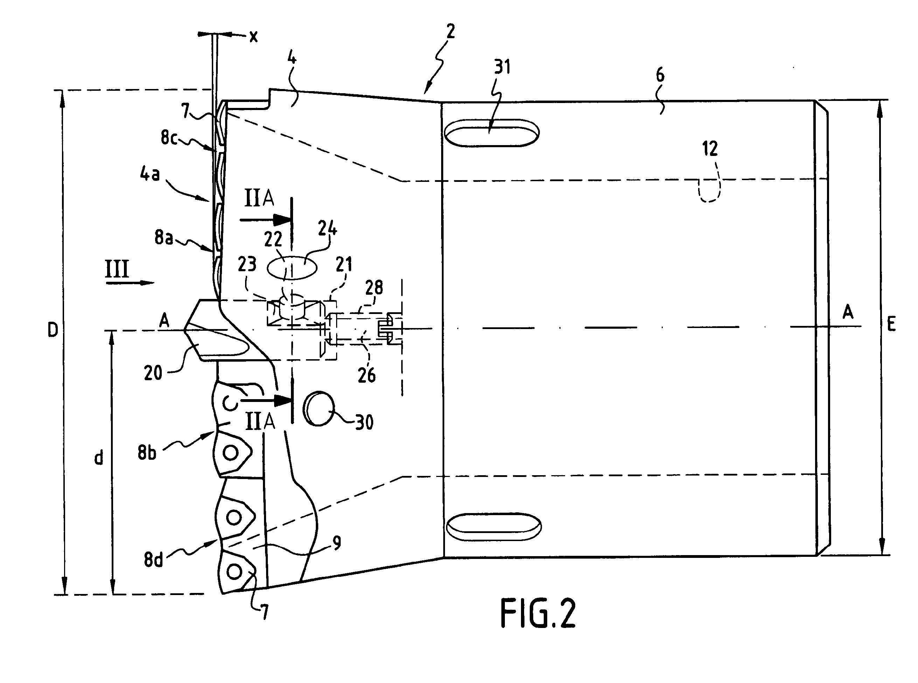

Selon un mode particulier de réalisation du foret pilote, ce dernier peut présenter au moins un canal 24 qui le traverse longitudinalement et à l'intérieur duquel un fluide de coupe va pouvoir circuler. Le foret 20, représenté figure 2 présente deux canaux 24 qui débouchent aux extrémités avant et arrière du foret et qui sont sensiblement symétriques par rapport à l'axe central A-A qui est, bien entendu, également l'axe de rotation du foret 20.

La structure de la tête de forage profond 2 de l'invention étant bien comprise, nous allons maintenant décrire le fonctionnement d'un outil de forage profond équipé d'une telle tête, en référence aux figures 4 et 5.

Quel que soit le mode de réalisation choisi, un outil de forage profond selon l'invention comprend généralement une barre d'entraînement en rotation, solidarisée à la tête de forage, et des moyens pour faire tourner ladite barre d'entraînement. La tête de forage 2 peut être montée sur la barre 40 par tout moyen approprié. Par exemple, l'extrémité de la barre 40 peut présenter un filetage extérieur susceptible de coopérer par vissage avec un filetage intérieur à la partie arrière 6 du corps 2.

Bien entendu, les moyens d'entraînement en rotation de la barre 40 doivent être susceptibles de développer un couple suffisant pour réaliser le forage profond.

Pour évacuer les copeaux taillés dans la pièce de fabrication, on utilise un fluide de forage, de préférence un liquide du type huile entière ou huile soluble entre 10 et 15%. Ce fluide de forage est injecté de manière à ce qu'il atteigne le fond du trou foré. Comme représenté figures 4 et 5, on peut envisager deux modes d'injection possibles.

En référence à la figure 4, le fluide de forage peut être injecté dans une chambre d'injection 50 formée entre un manchon 54 et la barre 40 ou la tête de forage. Le manchon 54 est disposé autour de la barre 40 (ou de la tête de forage) et au contact de la pièce de fabrication 60. L'étanchéité de la chambre 50 vis à vis de l'extérieur est assurée par des joints d'étanchéité 52 disposés entre le manchon 54 et la pièce 60 et entre le manchon 54 et la barre 40. Comme le diamètre extérieur maximal de la partie avant 4 du corps 2 est supérieur à celui de la partie arrière 6 dudit corps 2, et à celui de la barre d'entraînement 40, il subsiste un espace annulaire 58 délimité d'un côté par la paroi extérieure de la partie arrière 6 et de la barre 40, et de l'autre par la paroi intérieure du trou formé. Cet espace annulaire 58 communique avec la chambre d'injection 50 de sorte que le fluide injecté passe dans l'espace annulaire 58 pour parvenir au fond du trou creusé. Le fluide chargé des copeaux, est ensuite évacué par le conduit 12 intérieur au corps 2 et par le conduit 44 intérieur à la barre d'entraînement creuse 40. Des ouvertures 31 peuvent être ménagées dans la paroi extérieure du corps pour faciliter la circulation du fluide.

Selon un deuxième mode de réalisation, en référence à la figure 5, la barre d'entraînement 40 est formée de deux cylindres creux concentriques 41a et 41b. Le fluide de forage « entrant » est alors injecté entre les cylindres intérieur 41b et extérieur 41a et le fluide « sortant » est évacué avec les copeaux par l'intérieur du cylindre intérieur 41b. Pour limiter les turbulences au niveau de la tête de forage, il est possible de prévoir que l'extrémité avant du cylindre intérieur 41b soit évasée et dépasse celle du cylindre extérieur 41a, de manière à guider le fluide « entrant » vers des ouvertures 32 qui sont ménagées dans la paroi extérieure du corps 2 de la tête de forage et qui débouchent dans l'espace annulaire 58.

Le forage profond de la pièce 60 se déroule de la manière suivante. D'abord, on positionne l'outil par rapport à la pièce de fabrication. Pour ceci, on peut réaliser un avant trou destiné à recevoir, au moins en partie, le foret pilote 20. On peut également utiliser une frette de guidage 61 fixée sur la pièce 60 qui va permette de guider l'outil en début de forage, et éventuellement par la suite, en complément du guidage effectué par le foret pilote. Une telle frette 61 est représentée figure 5 et comprend une pièce annulaire 62 qui entoure l'outil et qui présente des ailettes 62a réparties régulièrement sur sa face intérieure et sur lesquelles l'outil va pouvoir prendre appui.

Ensuite, on entraîne en rotation l'outil. Le foret pilote 20 va alors pénétrer en premier dans la pièce 60 pour établir un trou secondaire de diamètre réduit au centre du trou primaire que l'on souhaite creuser. Ce trou secondaire permet de guider la tête de forage profond lors de son avancée, en assurant que son axe central A-A ne dévie pas de l'axe de forage. En outre, le foret pilote 20 une fois entré dans la pièce de fabrication 60 permet de stabiliser la tête de forage et d'empêcher, par exemple, que le tremblement éventuel des moyens d'entraînement en rotation se répercute au niveau de la tête de forage. Ainsi, grâce à l'invention on peut limiter significativement les déviations par rapport à l'axe du forage et plus généralement les défauts de géométrie du trou réalisé.

Une fois le forage terminé, on retire l'outil du trou. Pour éviter que le bord extérieur du tranchant 8d ne raye les parois de ce trou, il est prévu des patins en bronze 30 répartis à l'extérieur de la partie avant 4 du corps 2. Ces patins 8d font légèrement saillie en dehors du corps 2 de sorte que le corps puisse prendre appui sur ceux-ci lors du retrait. Le poids du corps 2 ne se répercute donc pas entièrement sur le tranchant 8d, ce qui limite la profondeur des rayures que ce tranchant pourrait faire sur les parois du trou réalisé. Les rayures peu profondes qui pourraient néanmoins résulter du retrait de l'outil peuvent être rectifiées sans difficulté lors d'une étape ultérieure d'usinage. On notera, que les patins sont suffisamment en retrait par rapport à la paroi du trou formé, pour ne pas entrer au contact de cette paroi lors du forage.

## Revendications

1. Tête de forage profond susceptible de tourner autour d'un axe central (A-A), comprenant un corps (2) dont la partie avant (4) présente au moins un tranchant (8a, 8b, 8c, 8d) suivi d'un évidement (10a, 10b) qui débouche sur un conduit (12) intérieur audit corps (2), ce conduit permettant l'évacuation vers l'arrière des copeaux susceptibles d'être formés lors du forage, **caractérisée en ce qu'**elle comprend à son extrémité avant et en son centre un foret pilote (20) apte à guider ladite tête lors du forage.

2. Tête de forage profond selon la revendication 1, **caractérisée en ce que** ledit tranchant (8a, 8b, 8c, 8d) est formé par au moins une plaquette de coupe (7) montée sur la partie avant (4) dudit corps (2).

3. Tête de forage profond selon la revendication 1 ou 2, **caractérisée en ce qu'**elle comprend, en outre, des patins (30) qui sont solidaires dudit corps (2) et qui font saillie à la périphérie latérale extérieure de ce dernier, la distance entre la face extérieure de ces patins (30) et l'axe central (A-A) étant inférieure à la distance (d) entre l'axe central (A-A) et le bord latéral extérieur du tranchant le plus éloigné de cet axe.

4. Tête de forage profond selon l'une quelconque des revendications 1 à 3, **caractérisée en ce que** le rayon du foret pilote (20) est au plus égal à 20% de la distance (d) entre l'axe central (A-A) et le bord extérieur du tranchant le plus éloigné de cet axe.

5. Tête de forage profond selon l'une quelconque des revendications 1 à 4, **caractérisée en ce que** le foret pilote (20) dépasse à l'avant du tranchant le plus avancé dudit corps d'une distance (d') comprise entre 1% et 20% de la distance (d) entre l'axe central (A-A) et le bord extérieur du tranchant (8d) le plus éloigné de cet axe.

6. Tête de forage profond selon l'une quelconque des revendications 1 à 5, **caractérisée en ce que** le foret pilote (20) est bloqué en rotation par rapport à la tête de forage.

7. Tête de forage profond selon l'une quelconque des revendications 1 à 6, **caractérisée en ce que** ledit foret pilote (20) est amovible et **en ce qu'**elle comprend, en outre, des moyens de réglage de la distance (d') de dépassement du foret pilote (20) à l'avant du corps (2).

8. Outil de forage profond, **caractérisé en ce qu'**il comprend une tête de forage profond selon l'une quelconque des revendications 1 à 7, une barre d'entraînement en rotation (40), solidarisée à ladite tête de forage, et des moyens pour faire tourner ladite barre d'entraînement (40).

9. Procédé de forage profond pour le forage d'une pièce de fabrication, **caractérisé en ce qu'**on utilise une tête de forage profond selon l'une quelconque des revendications 1 à 7, on fait tourner cette tête et on la guide, lors du forage, au moyen dudit foret pilote (20) qui s'enfonce en premier dans ladite pièce de fabrication (60).

10. Procédé de forage profond pour le forage d'une pièce de fabrication selon la revendication 9, **caractérisé en ce que**, avant le forage, on réalise un avant-trou, destiné à recevoir, au moins en partie, ledit foret pilote (20).

11. Utilisation de la tête de forage selon l'une quelconque des revendications 1 à 7 pour le forage d'une pièce de fabrication, **caractérisé en ce que** le rapport L/D entre la profondeur L du trou réalisé et le diamètre D de ce dernier, est supérieur ou égal à 10, et **en ce que** ladite pièce de fabrication (60) est une pièce en titane.

12. Utilisation de la tête de forage selon la revendication 11 pour le forage d'une pièce de fabrication, **caractérisé en ce que** ledit diamètre D du trou réalisé est supérieur ou égal à 65 mm.

## Claims

1. Deep hole boring head capable of rotating about a central axis (A-A), comprising a body (2) whose front part (4) has at least one cutting edge (8a, 8b, 8c, 8d) followed by a recess (10a, 10b) which leads to a duct (12) inside the said body (2), this duct allowing the chips formed during boring to be cleared away rearwards, **characterized in that** it comprises at its front end and at its centre a pilot bit (20) capable of guiding the said head during boring.

2. Deep hole boring head according to Claim 1, **characterized in that** the said cutting edge (8a, 8b, 8c, 8d) is formed by at least one cutting tip (7) mounted on the front part (4) of the said body (2).

3. Deep hole boring head according to Claim 1 or 2, **characterized in that** it also comprises pads (30) that are integral with the said body (2) and that protrude from the outer lateral periphery of the latter, the distance between the outer face of these pads (30) and the central axis (A-A) being less than the distance (d) between the central axis (A-A) and the outer lateral edge of the cutting edge furthest from this axis.

4. Deep hole boring head according to any one of Claims 1 to 3, **characterized in that** the radius of the pilot bit (20) is at most equal to 20% of the distance (d) between the central axis (A-A) and the outer edge of the cutting edge furthest from this axis.

5. Deep hole boring head according to any one of Claims 1 to 4, **characterized in that** the pilot bit (20) protrudes forward of the cutting edge furthest forward of the said body by a distance (d') of between 1% and 20% of the distance (d) between the central axis (A-A) and the outer edge of the cutting edge (8d) furthest from this axis.

6. Deep hole boring head according to any one of Claims 1 to 5, **characterized in that** the pilot bit (20) is prevented from turning relative to the boring head.

7. Deep hole boring head according to any one of Claims 1 to 6, **characterized in that** the said pilot bit (20) is removable and **in that** it also comprises means of adjusting the distance (d') by which the pilot bit (20) protrudes forward of the body (2).

8. Deep hole boring tool, **characterized in that** it comprises a deep hole boring head according to any one of the preceding claims, a rotary drive shaft (40), attached to the said boring head, and means for rotating the said drive shaft (40).

9. Deep hole boring method for boring a production piece, **characterized in that** a deep hole boring head according to any one of Claims 1 to 7 is used, this head is made to rotate and is guided, during boring, by means of the said pilot bit (20) which is first to penetrate into the said production piece (60).

10. Deep hole boring method for boring a production piece according to Claim 9, **characterized in that**, before boring, a pilot hole is made for the purpose of receiving, at least in part, the said pilot bit (20).

11. Use of the boring head according to Claims 1 to 7 for boring a production piece, **characterized in that** the ratio L/D between the depth L of the hole made and the diameter D of the latter is greater than or equal to 10, and **in that** the said production piece (60) is a piece made of titanium.

12. Use of the boring head according to Claim 11 for boring a production piece, **characterized in that** the said diameter D of the hole made is greater than or equal to 65 mm.

## Patentansprüche

1. Tiefbohrkopf, der geeignet ist, sich um eine Mittelachse (A-A) zu drehen, umfassend einen Körper (2), dessen vorderer Teil (4) wenigstens eine Schneide (8a, 8b, 8c, 8d) aufweist, an die sich eine Ausnehmung (10a, 10b) anschließt, die in eine Leitung (12) innerhalb des Körpers (2) mündet, wobei diese Leitung ermöglicht, die Späne, die während des Bohrens gebildet werden können, nach hinten abzuführen, **dadurch gekennzeichnet, daß** er an seinem vorderen Ende und in seiner Mitte einen Führungsbohrer (20) umfaßt, der geeignet ist, den Kopf während des Bohrens zu führen.

2. Tiefbohrkopf nach Anspruch 1, **dadurch gekennzeichnet, daß** die Schneide (8a, 8b, 8c, 8d) von wenigstens einem Schneidplättchen (7) gebildet ist, das an dem vorderen Teil (4) des Körpers (2) angebracht ist.

3. Tiefbohrkopf nach Anspruch 1 oder 2, **dadurch gekennzeichnet, daß** er ferner Klötzchen (30) aufweist, die mit dem Körper (2) fest verbunden sind und die von dessen äußeren Seitenumfang vorspringen, wobei der Abstand zwischen der Außenseite dieser Klötzchen (30) und der Mittelachse (A-A) geringer ist als der Abstand (d) zwischen der Mittelachse (A-A) und dem äußeren Seitenrand der von dieser Achse am weitesten entfernten Schneide.

4. Tiefbohrkopf nach einem der Ansprüche 1 bis 3, **dadurch gekennzeichnet, daß** der Radius des Führungsbohrers (20) höchstens gleich 20 % des Abstandes (d) zwischen der Mittelachse (A-A) und dem Außenrand der von dieser Achse am weitesten entfernten Schneide beträgt.

5. Tiefbohrkopf nach einem der Ansprüche 1 bis 4, **dadurch gekennzeichnet, daß** der Führungsbohrer (20) am vorderen Teil der am weitesten vorspringenden Schneide des Körpers um eine Weite (d') hinausragt, die zwischen 1 % und 20 % des Abstandes (d) zwischen der mittleren Achse (A-A) und dem Außenrand der von dieser Achse am weitesten entfernten Schneide (8d) beträgt.

6. Tiefbohrkopf nach einem der Ansprüche 1 bis 5, **dadurch gekennzeichnet, daß** der Führungsbohrer (20) gegenüber dem Bohrkopf drehgesichert ist.

7. Tiefbohrkopf nach einem der Ansprüche 1 bis 6, **dadurch gekennzeichnet, daß** der Führungsbohrer (20) lösbar ist, und daß er ferner Mittel zum Einstellen der Weite (d') des Hinausragens des Führungsbohrers (20) am vorderen Teil des Körpers (2) umfaßt.

8. Tiefbohrwerkzeug, **dadurch gekennzeichnet, daß** es einen Tiefbohrkopf nach einem der Ansprüche 1 bis 7, eine mit dem Bohrkopf fest verbundene Drehantriebsstange (40) sowie Mittel zum Drehen der Antriebsstange (40) umfaßt.

9. Tiefbohrverfahren für das Ausbohren eines Fertigungsteils, **dadurch gekennzeichnet, daß** ein Tiefbohrkopf nach einem der Ansprüche 1 bis 7 verwendet wird, dieser Kopf gedreht und während des Bohrens mittels des Führungsbohrers (20), der als erster in das Fertigungsteil (60) eindringt, geführt wird.

10. Tiefbohrverfahren für das Ausbohren eines Fertigungsteils nach Anspruch 9, **dadurch gekennzeichnet, daß** vor dem Bohren eine Vorbohrung ausgebildet wird, die dazu bestimmt ist, den Führungsbohrer (20) wenigstens teilweise aufzunehmen.

11. Verwendung des Bohrkopfes nach einem der Ansprüche 1 bis 7 für das Ausbohren eines Fertigungsteils, **dadurch gekennzeichnet, daß** das L/D-Verhältnis zwischen der Tiefe L des ausgebildeten Lochs und dessen Durchmesser D größer oder gleich 10 ist und daß das Fertigungsteil (60) ein Titanteil ist.

12. Verwendung des Bohrkopfes nach Anspruch 11 für das Ausbohren eines Fertigungsteils, **dadurch gekennzeichnet, daß** der Durchmesser D des ausgebildeten Lochs größer als oder gleich 65 mm ist.
